# EUROPÄISCHE PATENTSCHRIFT

(11) **EP 0 895 903 B1**
(45) Veröffentlichungstag und Bekanntmachung des Hinweises auf die Patenterteilung: **02.05.2002**
(21) Anmeldenummer: 98890230.0
(22) Anmeldetag: 06.08.1998
(51) Int. Cl.: B60R 21/16, B60R 13/02

(54) **Verkleidungsbauteil für Fahrzeuge**
Wall liner element for vehicles
Elément de garniture de paroi pour véhicules

(30) Priorität: 07.08.1997 AT 132897
(43) Veröffentlichungstag der Anmeldung: 10.02.1999
(73) Patentinhaber: Intier Automotive Eybl GmbH, 2435 Ebergassing (AT)
(72) Erfinder: Steiner, Karl, 2435 Ebergassing (AT); Bitterhof, Gebhard, 2435 Wr. Herberg (AT); Hahnekamp, Richard, 7000 Eisenstadt (AT)
(74) Vertreter: Vinazzer, Edith, Dipl.-Ing.

(56) Entgegenhaltungen:
- DE-A- 19 546 143
- DE-A- 19 608 239
- GB-A- 2 267 065
- US-A- 3 951 427
- "WINDSHIELD SYSTEM" RESEARCH DISCLOSURE, Nr. 268, August 1986, Seite 477 XP002074720 Emsworth, Hampshire, G.B.

## Beschreibung

Die Erfindung betrifft einen Verkleidungsbauteil für Fahrzeuge zum Schutz der Fahrzeuginsassen, bestehend aus einem im Wesentlichen steifen Träger, auf dem ein aufblasbares Kissen vorgesehen ist sowie mit einer Dekorschichte auf der dem Innenraum zugewandten Seite des Trägers.

Um das Verletzungsrisiko von Insassen eines Fahrzeugs bei Unfällen zu verringern, sind Airbags entwickelt worden. Es handelt sich dabei um Bauteile, die im Falle eines Unfalls kurzfristig aufgeblasen werden, um den Aufprall von Fahrzeuginsassen abzufangen. Solche Airbags wirken dabei in der Weise, dass schon unmittelbar nach Erreichen des vollständig aufgeblasenen Zustands ein Zusammensacken beginnt, um eine in den Airbag eintauchende Person weich aufzufangen.

Weiters ist aus der DE 34 22 263 C2 eine Sicherheitseinrichtung zum Schutz von Fahrzeuginsassen bei einem Seitenaufprall bekannt, bei der unter einem Verkleidungsteil eines Kraftfahrzeuges eine aufblasbare Hülle angeordnet ist. Wenn sich die Hülle aufbläst, wird der Verkleidungsteil abgesprengt und durch die aufgeblasene Hülle wird ein Prallelement geschaffen, das einen möglichen Aufprall eines Fahrzeuginsassen dämpft und das Verletzungsrisiko verringert. Eine solche Lösung ist jedoch relativ aufwendig, da Vorkehrungen getroffen werden müssen, um ein zuverlässiges und definiertes Absprengen des Verkleidungsteils zu gewährleisten. Besonders aufwendig wird die Lösung dann, wenn die räumliche Situation kompliziert ist, wie etwa bei dreidimensional gekrümmten Dachsäulen oder dergleichen. Weiters muss der Verkleidungsteil selbst steif sein, und kann seinerseits durch das Absprengen zu Verletzungen führen.

Die DE 195 46 143 A zeigt eine gattungsgemäße Rückhalteeinrichtung für Fahrzeuginsassen mit einer Blase aus einem elastisch verformbaren Material, die bei Bedarf aufgeblasen wird. Eine solche Blase, die lösbar eingespannt ist, ist jedoch nicht dazu geeignet, eine stabile und haltbare Verkleidung eines Fahrzeugbauteils zu ergeben.

Aufgabe der vorliegenden Erfindung ist es, die obigen Nachteile zu vermeiden, und eine Lösung zu schaffen, die mit relativ geringem Aufwand herstellbar ist und einen sicheren Schutz der Fahrzeuginsassen gewährleistet.

Erfindungsgemäß wird diese Aufgabe gemäß den Merkmalen von Patentanspruch 1 gelöst.

Wesentlich an der vorliegenden Erfindung ist der mehrschichtige Aufbau des Verkleidungsteils, wobei die Dekorschichte selbst im ursprünglichen Zustand mit dem Träger verbunden ist. Die Verbindung der Dekorschichte mit dem Träger erfolgt durch eine definierte Verklebung, die sich beim Einblasen des Gases löst. Wenn der Träger im Wesentlichen konvex geformt ist, kann jedoch die Verbindung teilweise auch durch die elastischen Spannkräfte der Dekorschichte selbst erfolgen, da sich diese selbsttätig an den Träger anlegt. In einem solchen Fall muss gewährleistet sein, dass die Dekorschichte eine ausreichende Elastizität aufweist, um sich durch das Einblasen von Gas vom Träger abheben zu können. Grundsätzlich ist auch eine Kombination dieser beiden Varianten möglich, das heißt eine Ausführung, bei der die Dekorschichte teilweise, etwa in konkav gewölbten Bereichen, mit dem Träger verklebt ist, teilweise jedoch durch ihre Spannung an ihm anliegt. Die Herstellung wird dadurch wesentlich vereinfacht, da nicht dafür Sorge getragen werden muss, dass die Dekorschichte selbst eine Eigensteifigkeit aufweist, wie dies beim Stand der Technik erforderlich ist. Ein formschönes Äußeres und eine sichere Vermeidung von losen Stellen wird durch die vollflächige Verbindung der Dekorschichte mit dem Träger erreicht.

Im allgemeinen ist der Träger selbst gasdicht, da er aus einem entsprechenden Kunststoffmaterial hergestellt ist. Andernfalls könnte durch eine entsprechende Lackierung oder durch eine gasdichte Beschichtung des Trägers dieses Erfordernis erfüllt werden.

Die erfindungsgemäße Lösung ist äußerst einfach, da praktisch keine zusätzlichen Anbauteile erforderlich sind. Der Wegfall mechanischer Teile verringert das Verletzungsrisiko. Da die Form des Trägers nicht beschränkt ist, sind beliebige formschöne Lösungen erreichbar, die keinen konstruktiven Zwängen unterliegen. Der Platzbedarf ist dabei minimal, da zusätzlich nur der Raum für die Gaspatrone eines Airbag-Moduls oder dergleichen zu berücksichtigen ist.

Ein weiterer Vorteil der vorliegenden Erfindung besteht darin, dass durch den einfachen Vorgang des Aufblasens ohne das Wegsprengen von Teilen eine wesentlich schnellere Öffnung erzielt wird. Dies ist besonders beim Seitenaufprall wichtig, da hier extrem wenig Zeit zur Verfügung steht, um die Entfaltung einer Schutzvorrichtung durchzuführen.

In einer besonders günstigen Ausführungsvariante der Erfindung ist vorgesehen, dass die Dekorschichte über Ränder des Trägers umgebogen ist, und in den umgebogenen Bereichen fest mit dem Träger verbunden ist. Dabei steht die volle Fläche des Verkleidungsbauteils als Grundfläche für das Kissen zur Verfügung.

Auch kompliziertere Geometrien können auf diese Weise einfach und wirksam hergestellt werden.

Eine weitgehende Gestaltungsfreiheit bei der Auswahl der Dekorschichte wird dadurch erreicht, dass an der Dekorschichte eine gasdichte Folie aufkaschiert ist. Es ist jedoch alternativ dazu auch ein gasdichtes Gewebe auf die Dekorschichte aufzubringen oder die Dekorschichte selbst gasdicht auszuführen.

Grundsätzlich ist die vorliegende Erfindung dazu vorgesehen, Prallelemente zu schaffen, die Fahrzeuginsassen vor einem harten Aufprall gegen Bauteile des Fahrzeugs schützen. Um diesen Schutz auch während eines länger andauernden Unfallgeschehens noch zu gewährleisten, ist dabei vorzugsweise vorgesehen, dass das Kissen einige Sekunden hindurch aufgeblasen bleibt. Auf diese Weise kann auch bei einem zweiten oder folgenden Aufprall oder einem Überschlag des Fahrzeugs, der nach einem ersten Aufprall stattfindet, eine Schutzwirkung gewährleistet werden. Die vorliegende Erfindung ist jedoch nicht auf solche Vorrichtungen beschränkt. Es ist grundsätzlich möglich, auch einen Bauteil in der Funktion eines Airbags in der erfindungsgemäßen Art auszubilden. In diesem Fall ist vorzugsweise eine definierte Undichtheit vorgesehen, um das Entweichen von Gas bei einem Aufprall zu ermöglichen. Auf diese Weise kann die Forderung erfüllt werden, dass eine Person, die in den Airbag geschleudert wird, weich aufgefangen wird.

In der Folge wird die Erfindung anhand des in den Figuren dargestellten Ausführungsbeispiels näher erläutert. Es zeigen:
- Fig. 1: eine schematische Darstellung eines erfindungsgemäßen Verkleidungsbauteils im ursprünglichen Zustand und die
- Fig. 2: den Verkleidungsbauteil nach dem Auslösen.

Der erfindungsgemäße Bauteil besteht aus einem Träger 1, der in an sich bekannter Weise aus thermoplastischem Kunststoff hergestellt ist und der einen Teil der Innenverkleidung eines Kraftfahrzeugs darstellt. Auf dem Träger 1 ist eine Sperrschicht in Form einer gasdichten Beschichtung 2 aufgeklebt und an den Kanten 3 des Trägers 1 umgebogen. Diese Beschichtung 2 ist aus produktionstechnischen Gründen für das Hinterspritzen vorgesehen.

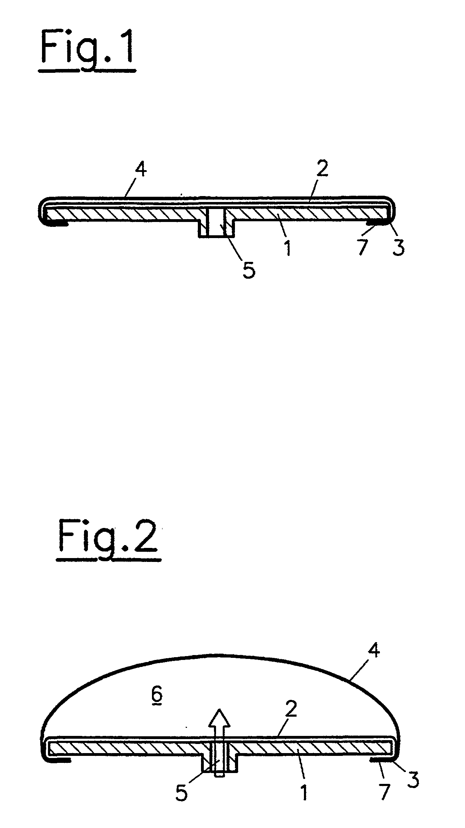

Die Dekorschichte 4 ist an ihrer Rückseite durch eine aufkaschierte Folie luftdicht ausgerüstet und auf die Beschichtung 2 in definierter Weise aufkaschiert. Dies bedeutet, dass eine für den normalen Betrieb ausreichende Haftkraft gegeben ist. Wenn jedoch durch eine Bohrung 5 aus einer nicht dargestellten Gaspatrone Gas in den Raum zwischen der Dekorschicht 4 und der Beschichtung 2 eingeblasen wird, löst sich diese Kaschierung und die Dekorschichte 4 bläst sich auf, wie dies in der Fig. 2 dargestellt ist. Der Umbug ist umlaufend an der Rückseite des Trägers 1 ultraschallverschweisst, so dass in diesem Bereich 7 eine sichere Verbindung gegeben ist. Da der Innenraum 6 zwischen der Dekorschichte 4 und der Beschichtung 2 im Wesentlichen gasdicht ist, bleibt das mit Gas gefüllte Kissen auch noch in dem Zeitraum nach dem unmittelbaren Aufprall aufgeblasen und schützt so die Insassen auch während eines einige Sekunden dauernden Unfallgeschehens, zum Beispiel bei einem mehrfachen Überschlag.

Die vorliegende Erfindung ermöglicht es in sehr einfacher Weise, einen wirksamen Schutz für die Insassen eines Kraftfahrzeugs zu erreichen.

## Patentansprüche

1. Verkleidungsbauteil für Fahrzeuge zum Schutz der Fahrzeuginsassen, bestehend aus einem im Wesentlichen steifen Träger (1), auf dem ein aufblasbares Kissen vorgesehen ist, sowie mit einer Dekorschichte (4) auf der dem Innenraum zugewandten Seite des Trägers (1), **dadurch gekennzeichnet, dass** der Träger (1) gasdicht ausgeführt ist, und dass die Dekorschichte (4) gasdicht ausgerüstet ist und über einen flächigen Bereich lösbar mit dem gasdichten Träger (1) verklebt ist.

2. Verkleidungsbauteil nach Anspruch 1, **dadurch gekennzeichnet, dass** die Dekorschichte (4) über Ränder (3) des Trägers (1) umgebogen ist und in den umgebogenen Bereichen (7) fest mit dem Träger (1) verbunden ist.

3. Verkleidungsbauteil nach einem der Ansprüche 1 oder 2, **dadurch gekennzeichnet, dass** der Träger (1) eine gasdichte Beschichtung (2) aufweist, die als Folie ausgebildet ist, die fest mit dem Träger (1) verbunden ist.

4. Verkleidungsbauteil nach einem der Ansprüche 1 bis 3, **dadurch gekennzeichnet, dass** an der Deckorschichte (4) eine gasdichte Folie aufkaschiert ist.

5. Verkleidungsbauteil nach einem der Ansprüche 1 bis 4, **dadurch gekennzeichnet, dass** eine definierte Undichtheit vorgesehen ist, um das Entweichen von Gas bei einem Aufprall zu ermöglichen.

## Claims

1. Structural cover member for vehicles to protect the vehicle passengers, comprising a substantially rigid carrier (1), on which an inflatable cushion is provided, and having a decorative layer (4) on the side of the carrier (1) facing the interior, **characterised in that** the carrier (1) has a gas-tight construction, and **in that** the decorative layer (4) is fitted in a gas-tight manner and is detachably adhered to the gas-tight carrier (1) via a flat region.

2. Structural cover member according to claim 1, **characterised in that** the decorative layer (4) is bent over edges (3) of the carrier (1) and is securedly connected to the carrier (1) in the bent-over regions (7).

3. Structural cover member according to one of claims 1 or 2, **characterised in that** the carrier (1) has a gas-tight coating (2), which is in the form of a film securedly connected to the carrier (1).

4. Structural cover member according to one of claims 1 to 3, **characterised in that** a gas-tight film is laminated on the decorative layer (4).

5. Structural cover member according to one of claims 1 to 4, **characterised in that** a specific permeability is provided in order to permit gas to escape in the event of any impact.

## Revendications

1. Elément de garnissage pour véhicules, destiné à protéger les passagers d'un véhicule, constitué d'un support (1) sensiblement rigide sur lequel il est prévu un coussin gonflable ainsi qu'une couche décorative (4) du côté du support (1) qui est dirigé vers l'espace intérieur du véhicule, **caractérisé en ce que** le support (1) est réalisé de façon étanche aux gaz, et **en ce que** la couche décorative (4) est mise en place de façon étanche aux gaz et est collée au support étanche aux gaz (1) de façon mobile sur une zone de la surface.

2. Elément de garnissage selon la revendication 1, **caractérisé en ce que** la couche décorative (4) est rabattue par-dessus les bords (3) du support (1) et est reliée fixe au support (1) dans les zones rabattues (7).

3. Elément de garnissage selon l'une des revendications 1 ou 2, **caractérisé en ce que** le support (1) comporte un revêtement (2) étanche aux gaz, qui se présente sous la forme d'une feuille qui est reliée fixe au support (1).

4. Elément de garnissage selon l'une des revendications 1 à 3, **caractérisé en ce qu'**une feuille étanche aux gaz est contrecollée sur la couche décorative (4).

5. Elément de garnissage selon l'une des revendications 1 à 4, **caractérisé en ce qu'**il est conféré une perméabilité définie pour permettre au gaz de s'échapper lors d'une collision.
